# EUROPÄISCHE PATENTSCHRIFT

(11) **EP 2 018 604 B1**
(45) Veröffentlichungstag und Bekanntmachung des Hinweises auf die Patenterteilung: **23.07.2014**
(21) Anmeldenummer: 07727758.0
(22) Anmeldetag: 04.04.2007
(51) Int. Cl.: G05B 19/045

(54) **VERFAHREN ZUM BETREIBEN EINES STEUERGERÄTS**
PROCEDURE FOR OPERATING A CONTROL UNIT
PROCÉDÉ POUR FAIRE FONCTIONNER UN APPAREIL DE COMMANDE

(30) Priorität: 08.05.2006 DE 102006021300
(43) Veröffentlichungstag der Anmeldung: 28.01.2009
(73) Patentinhaber: Robert Bosch GmbH, 70442 Stuttgart (DE)
(72) Erfinder: MEYER, Klaus-Gerd, 70825 Korntal-Muenchingen (DE); WEHLE, Johannes, 71696 Moeglingen (DE); BUCHHOLZ, Dieter, D-74343 Sachsenheim (DE); NOLLER, Roland, 71522 Backnang (DE); GNUTZMANN, Sven, 71665 Vaihingen/Enz (DE); BROEDE, Holger, 74177 Bad Friedrichshall (DE)
(86) Internationale Anmeldenummer: PCT/EP2007/053287
(87) Internationale Veröffentlichungsnummer: WO 2007/128631

(56) Entgegenhaltungen:
- DE-A1- 10 360 200
- US-A- 5 469 553
- US-A1- 2002 144 015
- US-B1- 6 892 362

## Beschreibung

Die Erfindung betrifft ein Verfahren zum Betreiben eines Steuergeräts, das mehrere Zustände annehmen kann. Die Erfindung betrifft weiterhin ein entsprechendes Steuergerät, sowie ein Computerprogramm und ein Computerprogrammprodukt zur Durchführung des beschriebenen Verfahrens.

### Stand der Technik

Es ist bekannt, beim Wechsel eines Systemzustands keine abrupten Zustandswechsel vorzunehmen, sondern eine Initialisierung des anzuspringenden neuen Zustands in einer endlichen, möglichst kurzen Zeit vorzunehmen. Während dieser Initialisierung wird neben Initialisierungsanteilen zusätzlich Funktionalität sowohl aus dem alten Zustand in einem schnellen Zeitraster als auch Funktionalität aus dem neuen Zustand in einem langsamen Zeitraster berechnet. Bei dieser Implementierung muss berücksichtigt werden, dass RAM-Zellen in langsamen Zeitrastern für Weiterberechnungen in schnellen Zeitrastern bereitgestellt werden. Dabei tritt das Problem auf, dass vorgenommene Initialisierungen während des Übergangs durch Zugriff auf gemeinsam genutzte RAM-Zellen aus dem alten Zustand heraus wieder zerstört werden, bevor letztendlich vollständig auf den neuen Zustand umgeschaltet werden kann.

Es ist weiterhin ein abruptes Umschalten bekannt, bei dem alle Funktionen berücksichtigen müssen, dass die für eine Berechnung notwendigen Eingangsgrößen rechtzeitig zur Verfügung stehen. Dies wird dadurch erreicht, dass die Eingangsgrößen in den Zeitrastern berechnet werden, in denen sie auch konsumiert werden. Dieses Vorgehen verursacht eine höhere Laufzeitbelastung im Vergleich zu einer Implementierung des vorstehend beschriebenen Verfahrens.

Aus der Druckschrift DE 199 63 214 A 1 sind ein Verfahren und eine Vorrichtung zum Hochfahren eines Steuergeräts für ein Kraftfahrzeug bekannt. In dieser werden folgende Schritte vorgeschlagen: Überprüfen, ob ein zu überwachender Vorgang vor dem Zurücksetzen des Steuergeräts eingeleitet war, Fortsetzen des zu überwachenden Vorgangs, falls der zu überwachende Vorgang vor dem Zurücksetzen des Steuergeräts eingeleitet war, und Einleiten des zu überwachenden Vorgangs, falls der zu überwachende Vorgang vor dem Zurücksetzen des Steuergeräts nicht eingeleitet war.

Die Druckschrift DE 103 60 200 A1 beschreibt ein Verfahren und eine Vorrichtung zum Betrieb eines Steuergeräts. Das Steuergerät enthält Steuergerätesoftware und diese Steuergerätesoftware oder Teile dieser können mehrere Zustände einnehmen, wobei jeder Zustand durch wenigstens einen Wert wenigstens einer Zustandsvariablen dargestellt wird. Dabei entspricht ein Übergang von einem ersten Zustand in einen zweiten Zustand einer Veränderung des Werts des Zustandsvariablen und es wird zwischen einem ersten internen Wert der Zustandsvariablen und einem zweiten externen Wert der Zustandsvariablen unterschieden, wobei beide Werte nach vollzogenem Zustandsübergang gleich sind und die Veränderung des externen Werts im Vergleich zur Veränderung des internen Werts verzögert abläuft. Somit wird eine Optimierung hinsichtlich Laufzeit und Ressourcenverbrauch erzielt.

### Offenbarung der Erfindung

Das erfindungsgemäße Verfahren zum Betreiben eines Steuergeräts, das mehrere Zustände annehmen kann, sieht vor, dass bei einem Übergang von einem ersten Zustand zu einem bzw. in einen zweiten Zustand während des Übergangs ein temporärer Übergangszustand zwischengeschaltet wird. Weiterhin umfasst der temporäre Übergangszustand eine klar umrissene Grundfunktionalität, wobei zur Umsetzung für den Übergangszustand eine neue Zeittabelle gewählt wird, die als Teil des Betriebssystems neu angelegt und entsprechend konfiguriert wird.

Das erfindungsgemäße Verfahren zum Betreiben eines Steuergeräts, das mehrere Zustände annehmen kann, sieht vor, dass bei einem Übergang von einem ersten Zustand zu einem bzw. in einen zweiten Zustand während des Übergangs ein temporärer Übergangszustand zwischengeschaltet wird.

Dieser temporäre Übergangszustand umfasst regelmäßig eine klar umrissene Grundfunktionalität, die bspw. eine externe Kommunikation sicherstellt Weiterhin kann die Grundfunktionalität eine Initialisierung des zweiten Zustands umfassen.

Der temporäre Übergangszustand wird vorzugsweise beim Auftreten einer Bedingung zum Umschalten bis zum Erreichen des zweiten Zustands zwischengeschaltet.

Es wird weiterhin ein Verfahren zum Betreiben eines Systems mit einem Steuergerät vorgestellt, bei dem ein Übergang von einem ersten Zustand in einen zweiten Zustand erfolgt, wobei während des Übergangs das Steuergerät einen temporären Übergangszustand einnimmt.

Das erfindungsgemäße Steuergerät kann mehrere Zustände annehmen und ist derart ausgestaltet, dass bei einem Übergang von einem ersten Zustand zu einen zweiten Zustand ein temporärer Übergangszustand zwischengeschaltet ist.

Das erfindungsgemäße Computerprogramm umfasst Programmcodemittel, um alle Schritte eines vorstehend beschriebenen Verfahrens durchzuführen, wenn das Computerprogramm auf einem Computer oder einer entsprechenden Recheneinheit ausgeführt wird.

Das erfindungsgemäße Computerprogrammprodukt umfasst eben diese Programmcodemittel, die auf einem computerlesbaren Datenträger gespeichert sind.

Das erfindungsgemäße Verfahren stellt sicher, dass während der Initialisierung für den neuen Systemzustand eine bestimmte Funktionalität, basierend auf zyklischen Zeitrastern, aufrecht erhalten bleibt, und gleichzeitig eine deterministische Initialisierung des zweiten bzw. neuen Systemzustands garantiert wird. Statt der dezentralen Initialisierung jeder einzelnen Funktion wird im Hinblick auf einen Systemzustandswechsel die Möglichkeit für eine zentrale Initialisierung geboten, um Flash-Ressourcen zu sparen und den Übergang zwischen Systemzuständen transparenter zu gestalten. In diesem Zusammenhang wird das abrupte Umschalten durch ein gezieltes, deterministisches Umschalten ersetzt.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1 zeigt: ein Zustandsdiagramm zur Verdeutlichung des erfindungsgemäßen Verfahrens.
- Figur 2 zeigt: ein weiteres Zustandsdiagramm:
- Figur 3 zeigt: eine Ausführungsform des erfindungsgemäßen Steuergeräts.

### Ausführungsformen der Erfindung

Die Erfindung ist anhand von Ausführungsbeispielen in der Zeichnung schematisch dargestellt und wird im folgenden unter Bezugnahme auf die Zeichnung ausführlich beschrieben.

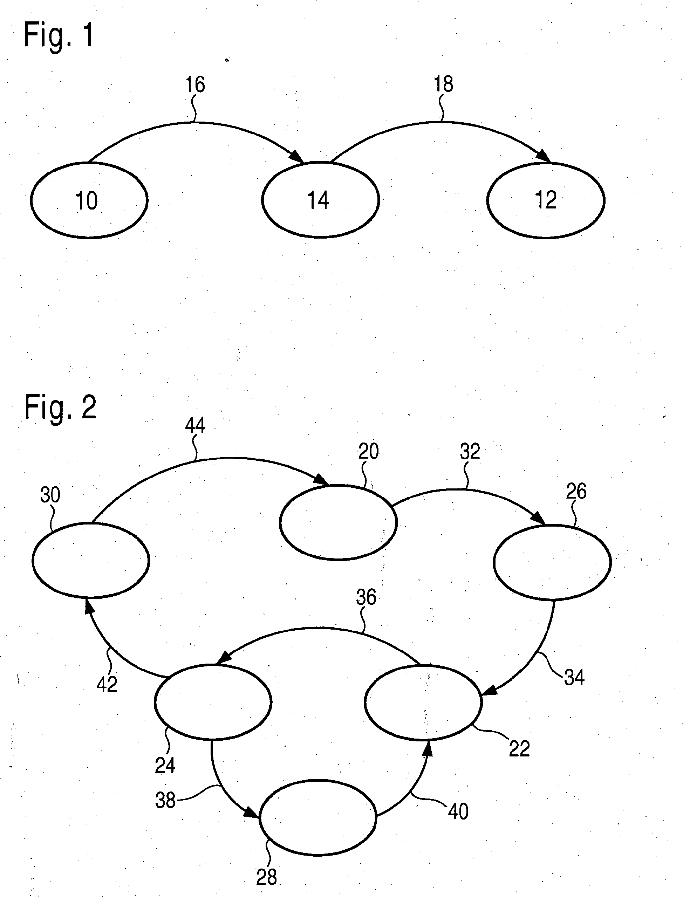

In Figur 1 ist ein Zustandsdiagramm zur Erläuterung des erfindungsgemäßen Verfahrens wiedergegeben. Dargestellt sind ein ersten Zustand Z110 und ein zweiter Zustand Z2 12. Weiterhin ist ein temporärer Übergangszustand TZ 14 dargestellt, in dem notwendige Aktionen für den Eintritt in den Folgezustand bzw. zweiten Zustand Z2 12 enthalten sind.

Zunächst befindet sich das Steuergerät in dem Zustand Z1 10. Bei Erfüllen einer ersten Bedingung [Bed. 1], wie durch einen Pfeil 16 verdeutlicht ist, nimmt das Steuergerät zunächst den temporären Übergangszustand TZ 14 an, in dem notwendige Aktionen für den Eintritt in den Folgezustand durchgeführt werden. Bei Vorliegen einer zweiten Bedingung [Bed. 2], wie durch einen weiteren Pfeil 18 dargestellt ist, erfolgt ein Übergang in den zweiten Zustand Z2 12.

Somit wird für die Zeitdauer vom Beginn der Umschaltung bei Auftreten der [Bed. 1] 16 bis zum Erreichen des angesprungenen Zustands Z2 12 ein temporärer Übergangszustand TZ 14 zwischengestaltet, in dem eine klar umrissene Grundfunktionalität dargestellt wird. Diese klar umrissene Grundfunktionalität umfasst notwendige Aktionen für den Eintritt in den Folgezustand Z2 12 und kann kontinuierlich erweitert werden. Durch diesen temporären Übergangszustand TZ 14 ist ein deterministischer Übergang von dem ersten Zustand Z1 10 zu dem zweiten Zustand Z2 12 möglich.

In Figur 2 ist ein weiteres Zustandsdiagramm dargestellt, das eine beispielhafte Anwendung eines Steuergeräts verdeutlicht.

Zu erkennen ist ein Zustand PreDrive 20, ein Zustand Drive 22 und ein Zustand PostDrive 24. Weiterhin sind ein erster temporärer Übergangszustand 26, ein zweiter temporärer Übergangszustand 28 und ein dritter temporärer Übergangszustand 30 zu erkennen.

Der Zustand PreDrive 20 stellt in dieser Betrachtungsweise exemplarisch den Ausgangszustand dar. Durch Erfüllen der Bedingung [Zündschlüssel ein] (Pfeil 32) wird der erste temporäre Übergangszustand 26 erreicht, der eine parallele Initialisierung des Zustands Drive 22 enthält. Sobald die parallele Initialisierung beendet ist, somit die Bedingung [parallele Initialisierung beendet] (Pfeil 34) geht das Steuergerät in den Zustand Drive 22 über. Das Steuergerät verbleibt in diesem Zustand, bis die Bedingung [Zündschlüssel aus] (Pfeil 36) erfüllt ist und das Steuergerät in den Zustand PostDrive 24 übergeht. Das weitere Verhalten in diesem Zustand 24 hängt von den in diesem Zustand 24 ausgeführten Aktionen ab. Ist die Bedingung [Zündschlüssel ein] (Pfeil 38) erfüllt, wird zunächst der zweite temporäre Übergangszustand 28 eingenommen, der eine parallele Initialisierung des Zustands Drive 22 umfasst. Sobald die parallele Initialisierung beendet ist, d.h. die Bedingung [parallele Initialisierung beendet] (Pfeil 40) gegeben ist, wird der Zustand Drive 22 eingenommen.

Ist ausgehend von dem Zustand PostDrive 24 die Bedingung [PostDrive abgeschlossen] (Pfeil 42) erfüllt, wird zunächst der dritte temporäre Übergangszustand 30 eingenommen. Dieser umfasst eine parallele Initialisierung des Zustands PreDrive 20. Sobald die Bedingung [parallele Initialisierung beendet] (Pfeil 44) gegeben ist, wird der Ausgangszustand PreDrive 20 eingenommen.

Somit werden in dem Steuergerät, für das in dieser Darstellung exemplarisch Systemzustände dargestellt sind, die Zustände PreDrive 20, Drive 22 und PostDrive 24 eingenommen. Diese Systemzustände zeichnen sich durch bestimmte Hardware-Randbedingungen aus, beispielsweise Zündschlüssel ein/aus, Hauptrelais ein/aus. Die Anforderung hierfür lautet, dass auch während des Umschaltens von Systemzuständen die externe Kommunikation, beispielsweise eine CAN-Kommunikation, nicht gestört werden darf. Der Übergang in den nächsten Systemzustand benötigt eine deterministische Initialisierung des folgenden Systemzustands in einer endlichen Zeit, während der keine Funktionalität im Zeitraster aus dem vorhergehenden Systemzustand - für den nächsten Systemzustand - initialisierte RAM-Zellen beschreiben und damit den Inhalt der RAM-Zellen zerstören darf. Durch Einführung eines temporären Übergangszustands kann die externe Kommunikation ungestört weiterlaufen und gleichzeitig die Initialisierung des folgenden Systemzustands durchgeführt werden.

Dieser Ansatz lässt eine schrittweise Erweiterung (Migration) der Grundfunktionalität zu, in der innerhalb der Funktionalität entsprechende Designvorgaben berücksichtigt werden.

Nachdem die Initialisierung des Folgezustands im Rahmen des Umschaltens der Systemzustände abgeschlossen ist, kann auf den Zielzustand mit der vollen Funktionalität komplett umgeschaltet werden.

Als mögliche Umsetzung für den Übergangszustand kann eine neue Zeittabelle gewählt werden, die als Teil des Betriebssystems neu angelegt und entsprechend konfiguriert werden muss.

Das erfindungsgemäße Verfahren hilft, Ressourcen (Flash) in dem Steuergerät einzusparen und ermöglicht eine transparente Umschaltung durch gezielt ausgelegte Funktionsanteile.

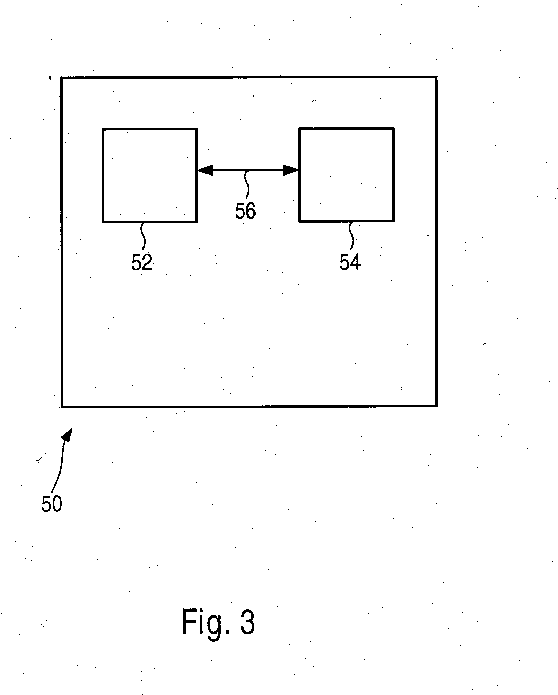

In Figur 3 ist eine Ausführungsform des erfindungsgemäßen Steuergeräts, insgesamt mit der Bezugsziffer 50 versehen, dargestellt.

In diesem Steuergerät befindet sich eine Recheneinheit 52 und eine Speichereinrichtung 54, die über eine Kommunikationsleitung 56, bspw. ein Bussystem, miteinander verbunden sind.

In der Speichereinrichtung 54 ist eine Software abgelegt, von der zumindest Teile mehrere Zustände annehmen können.

## Patentansprüche

1. Verfahren zum Betreiben eines Steuergeräts (50), das mehrere Zustände (10, 12, 20, 22, 24) annehmen kann, bei dem ein Übergang von einem ersten Zustand (10) in einen zweiten Zustand (12) erfolgt, wobei während des Übergangs ein temporärer Übergangszustand (14, 26, 28, 30) zwischengeschaltet wird, wobei der temporäre Übergangszustand (14, 26, 28, 30) eine klar umrissene Grundfunktionalität umfasst, **dadurch gekennzeichnet, dass** zur Umsetzung für den Übergangszustand (14, 26, 28, 30) eine neue Zeittabelle gewählt wird, die als Teil eines Betriebssystems neu angelegt und entsprechend konfiguriert wird.

2. Verfahren nach Anspruch 1, bei dem das Steuergerät (50) Steuergerätesoftware umfasst, wobei zumindest Teile der Steuergerätesoftware die mehreren Zustände (10, 12, 20, 22, 24) annehmen können.

3. Verfahren nach Anspruch 1 oder 2, bei dem die Grundfunktionalität eine externe Kommunikation sicherstellt.

4. Verfahren nach einem der Ansprüche 1 bis 3, bei dem die Grundfunktionalität eine Initialisierung des zweiten Zustands (12) umfasst.

5. Verfahren nach einem der Ansprüche 1 bis 4, bei dem der temporäre Übergangszustand (14, 26, 28, 30) beim Auftreten einer Bedingung zum Umschalten bis zum Erreichen des zweiten Zustands (12) zwischengeschaltet wird.

6. Verfahren nach einem der voranstehenden Ansprüche, bei dem mit dem Steuergerät (50) ein System betrieben wird.

7. Steuergerät, das mehrere Zustände (10, 12, 20, 22, 24) annehmen kann und derart ausgestaltet ist, dass bei einem Übergang von einem ersten Zustand (10) zu einem zweiten Zustand (12) ein temporärer Übergangszustand (14, 26, 28, 30) zwischengeschaltet ist, wobei der temporäre Übergangszustand (14, 26, 28, 30) eine klar umrissene Grundfunktionalität umfasst, **dadurch gekennzeichnet, dass** zur Umsetzung für den Übergangszustand (14, 26, 28, 30) eine neue Zeittabelle zu wählen ist, die als Teil des Betriebssystems neu anzulegen und entsprechend zu konfigurieren ist.

8. Steuergerät nach Anspruch 7, das Steuergerätesoftware umfasst, wobei zumindest Teile der Steuergerätesoftware die mehreren Zustände annehmen können.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit (52) ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit (52) ausgeführt wird.

## Claims

1. Method for operating a control unit (50) which can assume a plurality of states (10, 12, 20, 22, 24), in which there is a transition from a first state (10) to a second state (12), a temporary transition state (14, 26, 28, 30) being interposed during the transition, the temporary transition state (14, 26, 28, 30) comprising a clearly delineated basic functionality, **characterized in that**, for implementation for the transition state (14, 26, 28, 30), a new time table is selected which is newly created as part of an operating system and is accordingly configured.

2. Method according to Claim 1, in which the control unit (50) comprises control unit software, at least parts of the control unit software being able to assume the plurality of states (10, 12, 20, 22, 24).

3. Method according to Claim 1 or 2, in which the basic functionality ensures external communication.

4. Method according to one of Claims 1 to 3, in which the basic functionality comprises initialization of the second state (12).

5. Method according to one of Claims 1 to 4, in which the temporary transition state (14, 26, 28, 30) is interposed, upon the occurrence of a changeover condition, until the second state (12) is reached.

6. Method according to one of the preceding claims, in which the control unit (50) is used to operate a system.

7. Control unit which can assume a plurality of states (10, 12, 20, 22, 24) and is configured in such a manner that a temporary transition state (14, 26, 28, 30) is interposed during a transition from a first state (10) to a second state (12), the temporary transition state (14, 26, 28, 30) comprising a clearly delineated basic functionality, **characterized in that**, for implementation for the transition state (14, 26, 28, 30), a new time table should be selected which should be newly created as part of the operating system and should be accordingly configured.

8. Control unit according to Claim 7, which comprises control unit software, at least parts of the control unit software being able to assume the plurality of states.

9. Computer program having program code means for carrying out all steps of a method according to one of Claims 1 to 6 if the computer program is executed on a computer or a corresponding computing unit (52).

10. Computer program product having program code means which are stored on a computer-readable data storage medium for carrying out all steps of a method according to one of Claims 1 to 6 if the computer program is executed on a computer or a corresponding computing unit (52).

## Revendications

1. Procédé de mise en fonctionnement d'un dispositif de commande (50) pouvant passer dans une pluralité d'états (10, 12, 20, 22, 24), dans lequel une transition d'un premier état (10) à un second état (12) est effectuée, dans lequel, pendant la transition, un état de transition temporaire (14, 26, 28, 30) est interposé, dans lequel l'état de transition temporaire (14, 26, 28, 30) comprend une fonctionnalité de base clairement définie, **caractérisé en ce que**, pour une mise en oeuvre destinée à l'état de transition (14, 26, 28, 30), on choisit une nouvelle table de temps qui est de nouveau appliquée en tant que partie d'un système d'exploitation et est configurée en conséquence.

2. Procédé selon la revendication 1, dans lequel l'appareil de commande (50) comprend un logiciel de commande, dans lequel au moins certaines parties du logiciel de commande peuvent passer dans la pluralité d'états (10, 12, 20, 22, 24).

3. Procédé selon la revendication 1 ou 2, dans lequel la fonctionnalité de base assure une communication externe.

4. Procédé selon l'une quelconque des revendications 1 à 3, dans lequel la fonctionnalité de base comprend une initialisation du second état (12).

5. Procédé selon l'une quelconque des revendications 1 à 4, dans lequel l'état de transition temporaire (14, 26, 28, 30) est interposé lors de la survenue d'une condition de basculement jusqu'à ce que le second état (12) soit atteint.

6. Procédé selon l'une quelconque des revendications précédentes, dans lequel un système est mis en fonctionnement au moyen de l'appareil de commande (50).

7. Appareil de commande pouvant passer dans une pluralité d'états (10, 12, 20, 22, 24) et conçu de manière à ce que, lors d'une transition d'un premier état (10) à un second état (12), un état de transition temporaire (14, 26, 28, 30) est interposé, dans lequel l'état de transition temporaire (14, 26, 28, 30) comprend une fonctionnalité de base clairement définie, **caractérisé en ce que**, pour une mise en oeuvre destinée à l'état de transition (14, 26, 28, 30), on doit choisir une nouvelle table de temps qui doit de nouveau être appliquée en tant que partie d'un système d'exploitation et doit être configurée en conséquence.

8. Appareil de commande selon la revendication 7, comprenant un logiciel de commande, dans lequel au moins certaines parties du logiciel de commande peuvent passer dans la pluralité d'états.

9. Programme informatique comportant des moyens de codage de programme, pour mettre en oeuvre toutes les étapes d'un procédé selon l'une quelconque des revendications 1 à 6 lorsque le programme informatique est exécuté sur un ordinateur ou sur une unité de calcul correspondante (52).

10. Programme informatique comportant des moyens de codage de programme, qui sont stockés sur un support de données lisible par ordinateur, pour mettre en oeuvre toutes les étapes d'un procédé selon l'une quelconque des revendications 1 à 6 lorsque le programme informatique est exécuté sur un ordinateur ou sur une unité de calcul correspondante (52).
